# EUROPEAN PATENT SPECIFICATION

(11) **EP 0 896 705 B1**
(45) Date of publication and mention of the grant of the patent: **05.01.2000**
(21) Application number: 97921760.1
(22) Date of filing: 23.04.1997
(51) Int. Cl.: G06F 3/033, G06K 11/18

(54) **DEVICE FOR PLAYING GAMES VIA A COMMUNICATIONS NETWORK, AND A GAMES SYSTEM USING A COMMUNICATIONS NETWORK**
VORRICHTUNG ZUM SPIELEN ÜBER EIN NETZWERK UND EIN SPIELSYSTEM UNTER VERWENDUNG EINES ÜBERTRAGUNGSNETZWERKES
DISPOSITIF PERMETTANT DE JOUER A DES JEUX PAR L'INTERMEDIAIRE D'UN RESEAU DE COMMUNICATION ET SYSTEME DE JEU UTILISANT UN RESEAU DE COMMUNICATION

(30) Priority: 26.04.1996 WO PCT/EP96/01739; 24.10.1996 EP 96202967
(43) Date of publication of application: 17.02.1999
(73) Proprietor: Koninklijke KPN N.V., 9726 AE Groningen (NL)
(72) Inventor: PIETERSE, Rob, NL-2111 ZL Aerdenhout (NL); PORS, Mark, Albert, NL-2719 KV Zoetermeer (NL); DE LANGE, Martin, Klaas, NL-2272 NN Voorburg (NL); VAN POMEREN, Frank, Pieter, NL-2624 NZ Delft (NL); VAN TILBURG, Johan, NL-2719 KK Zoetermeer (NL)
(74) Representative: Klein, Bart
(86) International application number: EP9702123
(87) International publication number: WO9741530

(56) References cited:
- EP-A- 0 602 840
- DE-A- 4 228 071
- GB-A- 2 192 342
- US-A- 4 786 768
- US-A- 5 236 199
- PATENT ABSTRACTS OF JAPAN vol. 96, no. 11, 12 July 1996 & JP 08 179742 A (MATSUSHITA ELECTRIC IND CO LTD), 29 November 1996

## Description

### BACKGROUND OF THE INVENTION

The present invention relates to a device for playing games or otherwise influencing events via a communications network. More in particular, the present invention relates to a pointing device, such as a joystick, which enables interaction with a games server via a telephone network, and which preferably also allows payments to be made.

Pointing devices, such as joysticks, are well known computer peripherals. A joystick allows figures (or a cursor) to move over the screen of the computer. It is also known in practice to use the screen of a television set, the joystick being connected to e.g. a games computer which is in turn connected to the television set. A disadvantage of such an arrangement is that it requires the user to have a games computer at his disposal. Other systems are known which allow the remote playing of games via a telephone network and do not require the user to have a games computer, as the game is being played on a central games computer.

US Patent 5,236,199 discloses a system in which the keypad of a telephone set is used to provide directional information transmitted as DTMF (Dual Tone Multiple Frequencies) signals. This directional information is processed and is displayed by a television set. Although such a system allows the remote playing of video games, the handling of the telephone keypad is felt to be unnatural and clumsy.

US Patent 4,786,768 discloses a joystick for use with a computer keyboard. The movement of the joystick results in keys of the keypad being depressed, thus allowing a more natural and handy way of directing an object (e.g. cursor) than by using keys of the keypad. This reference does not suggest to use the joystick in conjunction with a telephone set.

Japanese Patent Application JP 8-179,742 discloses a system in which cursor information produced by a so-called mouse is converted into DTMF signals which are multiplexed with voice signals and transmitted over a telephone line. However, for playing games, a joystick is more practical than a mouse. Also, this known system does not provide for making payments and is thus not suitable for paying for playing remote games, nor is this known system suitable for collecting prize money.

UK patent application GB 2 192 342 discloses a coin operated games machine having a joystick and a separate keyboard. Magnetic cards may be used with this games machine to store a user identification and to store games credit. A modem is provided for communicating with a remote computer to compare scores of several machines.

US Patent 5,341,421 discloses a pointing device comprising a track ball for use with a computer. In conjunction with a smart card, this Prior Art pointing device may be used as a security device for e.g. gaining access to protected computer files. A similar combined security and pointing device, constituted by a mouse provided with a smart card reader, is disclosed in German Patent Application DE 4,326,735. These Prior Art devices are not suited for the remote playing of games via a telephone network.

There is thus a need for a pointing device, shaped like a joystick, which allows games to be played via a telephone network. In addition, there is a need for handling financial transactions via a telephone network in order to allow a playcr to pay for a game or, conversely, to cash prize money.

### SUMMARY OF THE INVENTION

It is an object of the invention to overcome the above-mentioned and other disadvantages of the Prior Art and to provide a pointing device which allows games to be played via a public communications line, such as a telephone line, without the need for a computer at the location of the player.

It is another object of the present invention to provide a pointing device which allows financial transactions, e.g. to pay for the games played or to receive payments in the case of games won.

It is a further object of the present invention to provide a pointing device which allows to use a single communications channel for both the game proper and the financial transactions involved.

It is a still further object of the present invention to provide a pointing device which allows a quick and efficient communication with a remote device, such as a server.

To these and other ends, a pointing device for generating signals representing directional information and comprising:
- signal generating means for generating pointing signals in response to pointing means being activated by a user,
- an interface, electrically connected with the signal generating means, for generating signals in response to pointing signals received from the signal generating means,
is in accordance with the present invention characterized in that
- the pointing means are constituted by a tiltable stick, the signal generating means and the interface being arranged for providing signals corresponding with different tilting directions of the stick.
- the device further comprises a card reader/writer, electrically connected with the said interface, for exchanging data with a smart card.
Advantageously, a DTMF interface (DTMF generator and, optionally, DTMF receiver) can be used. which offers the possibility of communicating over a telephone line without the need for an additional computer.

Preferably, the means for generating pointing signals comprise first activating means mechanically connected with the pointing means, second activating means mechanically connected with one or more keys, and control means for processing pointing signals. In addition to the first pointing means, which may be constituted by e.g. a joystick or a track ball, keys are provided. This allows for additional functions. The activating means preferably provide a mapping of the keys of a telephone set. That is, the activating means correspond with the keys of a telephone set where the keys "1" through "4" and "6" through "9" may be used to indicate different directions relative to the "5" key, the "5" key being used as "Fire" key. The keys "*", "0" and "#" may be used for additional functions, such as "Start", "Stop" and "Hold".

Advantageously, the pointing device of the present invention further comprises a card reader/writer for exchanging data with a smart card. The card reader/writer is preferably coupled with the telephone line via the control means and the DTMF interface. Such a pointing device allows to play and pay over the same channel, i.e. over the same telephone line, even allowing financial transactions simultaneously with the playing of the game.

Advantageously, the pointing device of the invention is arranged for communicating with a server on a first level and with the smart card on a second level, each level involving a different effective data rate. This allows an efficient and fast data exchange with the smart card, thereby causing the least interference with the game.

The invention further provides a system for remote entertainment, comprising a pointing device as described above, a telephone set for dialling a server, the device and the telephone set being connected with a communications network, the server being connected with the communications network via a modem, the server comprising means for producing and transmitting video data, a television set having means for receiving video data, said video data being dependent on direction data produced by the pointing device and transmitted as DTMF signals over the network.

It should be noted that United States Patent US 5,341,421 discloses a computer peripheral having a track ball and a card reader. The track ball is used as a pointing device, i.e. as a "mouse", while the card reader is used as a security device for providing access to the computer. The use of this known device for remotely playing video games, e.g. via a telephone network, is not disclosed. Neither is there any interoperability between the card reader and the track ball.

### BRIEF DESCRIPTION OF THE DRAWINGS

Fig. 1 shows in perspective a pointing device according to the present invention.

Fig. 2 shows a functional diagram of a first embodiment of the pointing device of the invention.

Fig. 3 schematically shows in more detail a switching means of the diagram of Fig. 2.

Fig. 4 shows a functional diagram of a second embodiment of the pointing device of the invention.

Fig. 5 shows a first embodiment of a system for remotely playing games according to the present invention.

Fig. 6 shows a second embodiment of a system for remotely playing games according to the present invention.

Fig. 7 diagrammatically shows the exchange of smart card commands in the system of Fig. 5.

### EXEMPLARY EMBODIMENTS

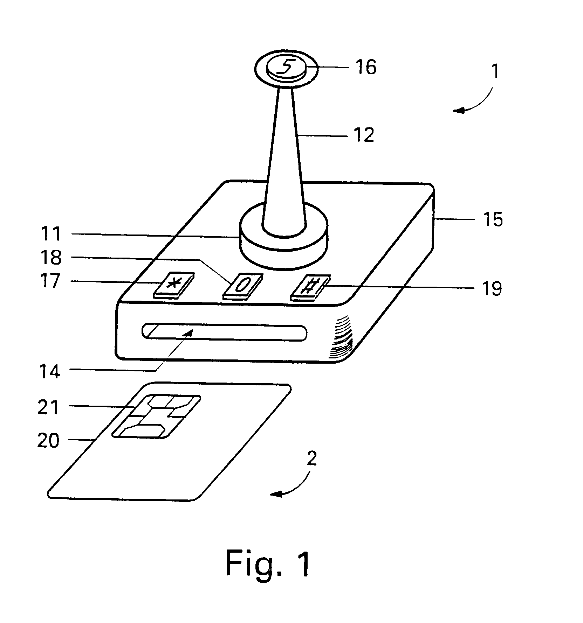

The embodiment of the pointing device of the invention shown by way of example in Fig. 1 comprises a body 15. A pointing means (joystick proper) 12 is hingedly connected with the body 15 via a bearing 11 so as to allow the pointing means 12 to be tilted with respect to the body 15 in several (preferably at least eight) directions. The pointing means 12 is provided with a button 16 which serves as "Start" and/or "Fire" button. Additional buttons 17 ("*"), 18 ("0") and 19 ("#") correspond with similar buttons of a telephone set. This will be explained in more detail later.

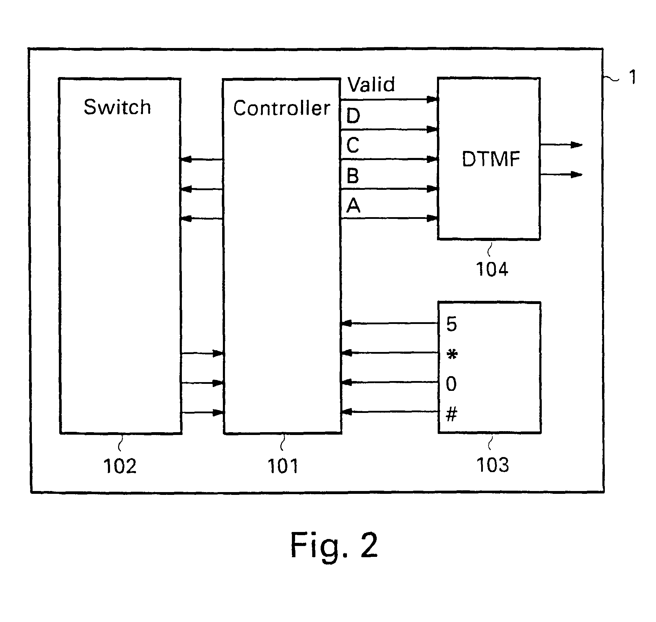

According to a first aspect of the invention, the pointing device 1 can be used as a substitute of the keypad of a telephone set, producing DTMF tones in response to the handling of the device 1. It will be understood that a pointing device of this kind is much easier to use, and hence more enjoyable to play with, than the keypad of a telephone set. Yet the producing of DTMF (Dual Tone Multiple Frequency) signals allows the device to communicate via a telephone network without the aid of a computer. This aspect of the present invention will later be further explained with reference to Fig. 2.

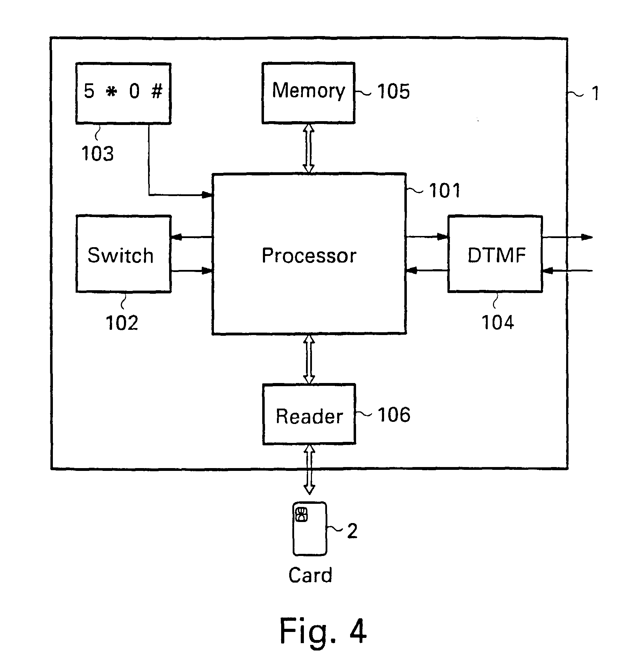

According to a second aspect of the present invention, the pointing device allows financial transactions to be made before, during and after the playing of a game. To this end, the device 1 of the invention is provided with a card slot 14, in which a smart card 2 can be inserted. The smart card (also called IC card or chip card) is provided with an integrated circuit, the contacts 21 of which allow the exchange of data with the pointing device 1. This aspect of the present invention will later be further explained with reference to Fig. 4.

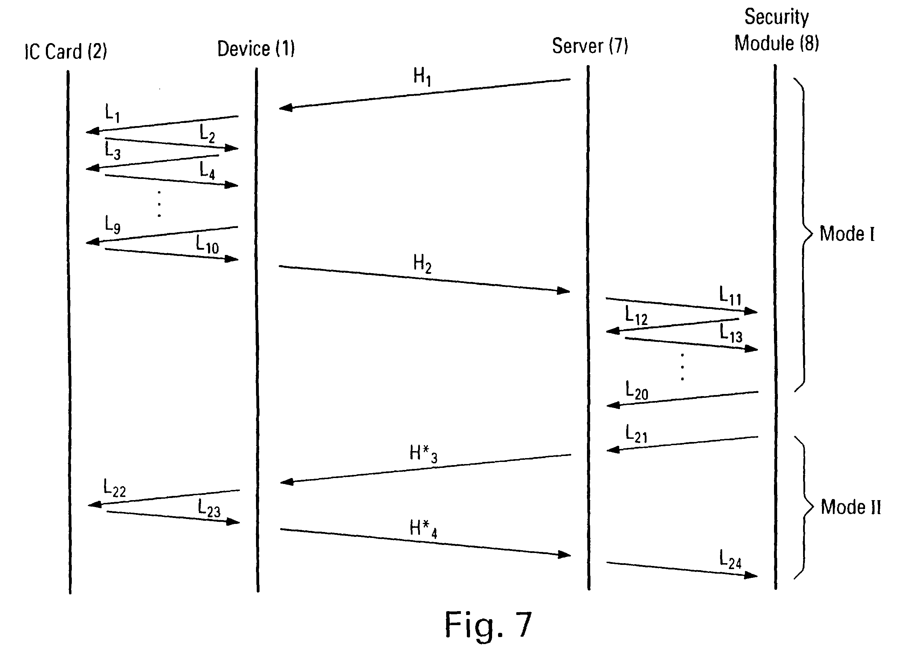

According to a third aspect of the present invention, the pointing device 1 employs a two-level protocol in order to efficiently and quickly exchange data with a support system. This aspect of the invention will later be further explained with reference to Fig. 7.

In Fig. 2, a first embodiment of the pointing device of the present invention is schematically shown. The device 1 comprises a control means 101, a first activating means 102, a second activating means 103, and a DTMF generator 104. The control means 101 is in the embodiment shown constituted by a microcontroller, which may be commercially available, but may also be constituted by a suitable microprocessor or microcomputer. The first activating means 102 is a switch, which is mechanically connected with the pointing means 12 shown in Fig. 1. The second activation means 103 is constituted by the buttons 16 through 19 shown in Fig. 1. The controller 101 continually scans the first activating means (switch) 102 via suitable scanning lines. The second activating means 103 produce signals which cause the controller 101 to react. In response to a movement of the pointing means 12 or the depressing of a button 16, 17, 18 or 19, the controller produces a corresponding signal which is passed to the DTMF generator 104 (it will be understood that the pointing means 12 may also be constituted by a "track ball" or the ball of a "mouse", in which case the activating means are constituted by the corresponding displacement sensors). The controller 101 may also produce a "Valid" signal indicating that the corresponding signal may be transmitted. Accordingly, the DTMF generator 104 produces DTMF tones which are transmitted to a server via a telephone line. It will be understood that the DTMF generator/receiver 104 may be replaced by another suitable interface if use is made of another communications protocol, e.g. RS232.

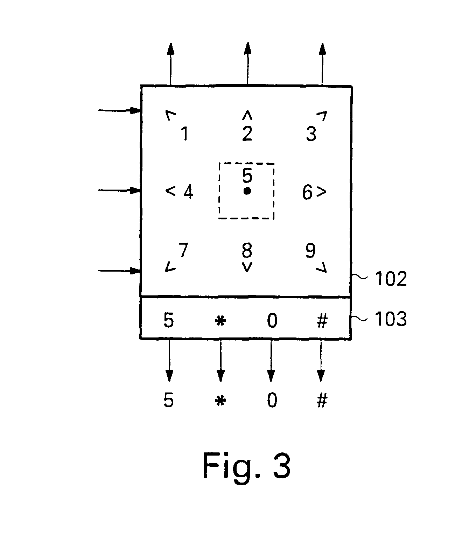

Fig. 3 shows the first and second activation means 102 and 103 in more detail. The first activation means 102 constitute a matrix, corresponding with the buttons 1 through 9 of the keypad of a telephone set. The device 1 thus provides a mapping of the keys of a telephone set. Each button corresponds with a direction of movement, as indicated in Fig. 3, while the button "5" corresponds with the "Fire" button (16 in Fig. 1). The switch matrix constituting the first activation means 102 is scanned using scanning lines, one line being associated with each row and each column of the matrix.

A second embodiment of the device 1 of the present invention is shown, by way of example, in Fig. 4. In this embodiment, the control means 101 is constituted by a microprocessor having an associated memory 105. In addition to the first and second activation means 102 and 103 and the DTMF interface 104, a card reader/writer 106 (denoted as "Reader" in Fig. 4) is connected with the control means 101. The card reader 106 allows the exchange of smart card commands and data with a smart card 2.

It should be noted that in the embodiment of Fig. 4, the DTMF interface 104 is constituted by a DTMF generator and receiver, i.e. a bidirectional device. This allows the smart card 2 to receive data. In Fig. 2 the unit 104 may only comprise a DTMF generator as the data communication of the embodiment of Fig. 2 is unidirectional.

The processor (101) performes several tasks. It scans the switch 102 and passes suitable signals to the DTMF generator 104 in response to changes in the states of the activating means 102 and 103. The processor also acts as an interface between the card reader 106 and the DTMF generator 104. In this respect, the processor 101 preferably performs a transparant protocol conversion, as will later be explained with reference to Fig. 7. The processor 101 may further perform additional control tasks, e.g. separating card data and direction data (the latter being related to the activation means). Preferably, the processor inserts a header code before each data item to be transmitted. Thus, the DTMF interface can be made to produce e.g. a DTMF code "12" indicating that the following data constitute card data and a DTMF code "13" indicating pointer (directional) data. Advantageously, the user can be asked to release the pointing means if a score is to be paid to the user, or if the user has to pay for the game. The release of the pointing means releases the communication channel to the server for the exchange of payment data.

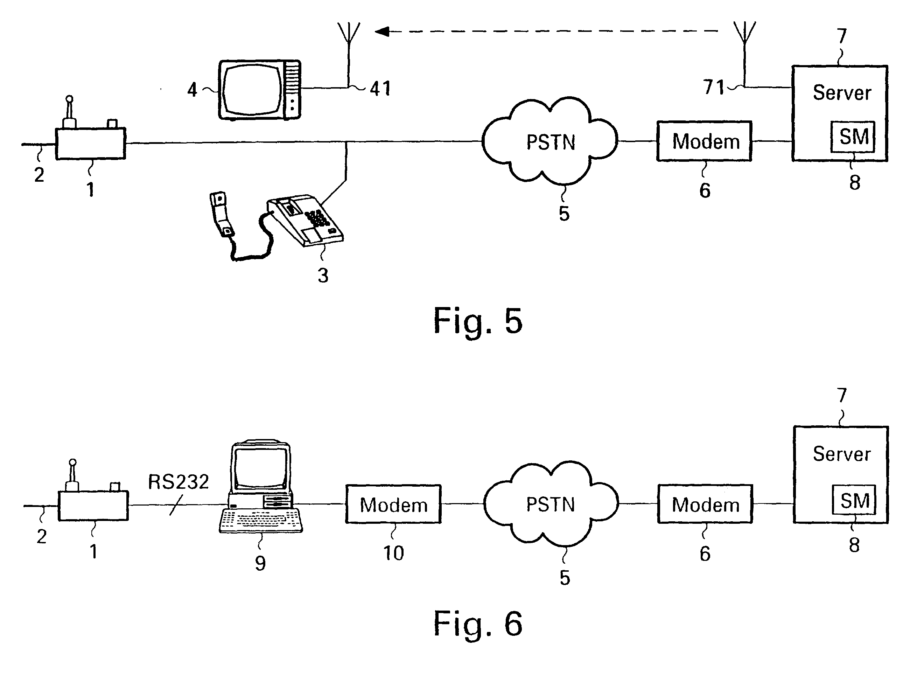

Fig. 5 shows a first embodiment of a system enabling the remote playing of games. The system comprises a pointing device 1, which may correspond with the pointing devices 1 shown in Figs. 1-4. The pointing device 1 preferably co-operates with a smart card 2 inserted into the pointing device 1. A telephone set 3 and the device 1 are connected via a communications line, such as a telephone subscriber line, with a communications network 5. The network 5 is in the example shown a PSTN (Public Switched Telephone Network), but may also be constituted by a e.g. cable network suitable for transmitting DTMF signals.

A modem 6 connects a server 7 with the network 5. The modem 6, which may be a commercially available modem as used for computer communications, converts DTMF signals into a format appropriate for the server 7, and vice versa.

The server 7 may be constituted by a commercially available computer (e.g. a "personal computer") or a suitable computer system. The server preferably comprises a security module 8, denoted as "SM" in Fig. 5. The security module 8 serves to securily store counter values, such as monetary balances, and to securely exchange information with a smart card 2 by using secure (cryptographic) protocols. Security modules are commercially available components. Instead of a separate (and possibly removable) security module, the functions of such a module may be performed by other components of the server (memory and processor), the security module thus being integrated in the server.

A more advanced system for effecting financial and other transactions via a communications network is described in International Patent Application PCT/EP/04402, filed October 9, 1996. Said advanced system may be used in conjunction with, or in addition to, the server 7.

The server 7 of Fig. 5 is further provided with an antenna 71 for broadcasting games information to players. This information may be received at the player's end by an antenna 41 connected with a television set 4 (it will be understood that the antennas 41 and 71 may be replaced by a suitable cable network). The television set 4 displays the game as transmitted by the server. To this end, the server comprises storage means for storing games information, and processing means for running games software and broadcasting images corresponding with the game.

When a game is being played, the user influences the game by means of the pointing device 1. Direction information transmitted by the device 1 results in e.g. movements of objects on the screen of the television set 4. Although the flow of games information is unidirectional (i.e. from the device 1 to the server 7, and from the server 7 to the television set 4), the flow of "financial" information is bidirectional, as most security protocols require the card 2 and the security module 8 to exchange information rather than to provide information unidirectionally.

In Fig. 6, an alternative embodiment of a system for remotely playing games is shown. The system of Fig. 6 also comprises a device 1 in which a smart card 2 may be inserted, a communications network 5, a modem 6, and a server 7 with a security module 8. Instead of a telephone set 3 and a television set 4, a computer 9 is used. A modem 10 connects the computer 9 with the network 5. The communication between the device 1 and the computer 9 may be effected by regular digital communication signals instead of by DTMF pulses. For that purpose, the DTMF interface 104 (Figs. 2 and 4) is replaced by e.g. a RS232 interface. In the embodiment of Fig. 6, the network 5 may be a PSTN, but may also be constituted by a computer network (or group of networks), such as internet.

The systems of Figs. 5 and 6 have been explained with reference to playing games. It will be understood that instead of games, other applications may be used, e.g. teleshopping where the shopper uses the pointing device to point at items to be purchased, a menu of items being displayed on the screen of the television set 4 or the computer 9. It should further be noted that in the case of so-called contactless smart cards the contacts 21 shown in Fig. 1 may be absent, and that such a contactless card may not have to be inserted in the device 1.

In Fig. 7, the exchange of card data (commands and data sent to the IC card and their responses) between an IC card (smart card 2 in Figs. 5 and 6) on the one hand and a security module 8 of the server 7 (or of a suitable transaction unit, as described in International Patent Application PCT/EP96/04402) on the other hand is schematically represented. The IC card may thus correspond with the card 2 of Fig. 1, the device may correspond with the pointing device 1 of Fig. 1, the server may be the server 7 of Figs. 5 and 6, and the security module may correspond with the security module (SM) 8 in Figs. 5 and 6.

In accordance with the third aspect of the present invention, a distinction is made between two levels of card commands exchange. Between the IC card and the device, a low level exchange takes place: the actual card commands and card data are sent to and received from the card. As this exchange is performed using electrical signals within the device 1, the exchange can have a high data rate. Between the device and the server, however, a transmission path having a limited bandwidth is present (the telephone line and associated network between the device 1 and the modem 6). This section of the connection between IC card 2 and security module 8 usually has a limited transmission speed. For this reason, in this section a high level exchange takes place in which several low level commands are grouped together and are replaced with a single high level command. In this way, the transmission time required for a transaction can be significantly reduced. However, the content of the information transferred is not changed, resulting in a substantially transparant data transfer. This will further be explained with reference to Fig. 7.

As is shown in Fig. 7, the server 7 may issue a high level command (indicated by H). In response to the receipt of this single high level command, the device exchanges several low level commands (indicated by L) with the IC card 2. The result of this exchange is sent by the device to the server as a single high level command (H). Subsequently, this high level command results in the exchange of several low level commands (L) between the server and the security module. Each high level command (H) thus represents a routine comprising a plurality (e.g. five of ten) low level commands (L). Preferably, the high level commands are optimized for efficiency by e.g. having each commonly used routine represented by a single high level command.

Preferably, the device supports two different modes of data exchange. In a first mode (indicated by Mode I in Fig. 7) the device operates as described above: a high level command represents several low level commands. In a second mode (indicated by Mode II in Fig. 7) a single low level command (L) is sent as a high level command (H*) to the device, which passes the command as a low level command to the IC card. The resulting low level command (L) produced by the card is again sent by the device to the server as a high level command (H*), which subsequently converts the command back into a low level command (L). It will be understood that the high level commands H* merely convey low level commands (L). That is, the high level commands H* may e.g. consist of a low level command plus an appropriate header. In this way, low level commands may be transparantly passed to the IC card while using the structure and/or data protocol of the high level commands. This transparant passing has the advantage that low level commands may be used for which no high level command is available, i.e. which cannot be grouped in an existing high level command. This is especially advantageous as the introduction of an IC card with one or more new commands does not necessitate an upgrade of the software of the device.

Preferably, the device, as well as the server, is capable of shifting back and forth between Mode I and Mode II, so that high level commands (H) representing a number of low level commands may be interspersed with high level commands (H*) merely conveying a single low level command.

The message exchange of Fig. 7 will now be explained in greater detail, using a devaluation of the smart card (i.e. a payment) as an example.

The server 7, which handles card devaluations, issues a high level command H₁ = DEVALU(2.00, R), where 2.00 is the amount which is to be deducted from the card and R is a random number which serves to securely identify the transaction and thus to prevent fraudulent replay. This high level command H₁, which itself may have a length of only several bytes, causes the device 1 to exchange a series of low level messages L₁ - L₁₀ with the card 2. Such messages are e.g.:

| | | |
|---|---|---|
| L₁ | select purse | ( ← ) |
| L₂ | done | ( → ) |
| L₃ | select application | ( ← ) |
| L₄ | done | ( → ) |
| L₅ | present value (2.00) | ( ← ) |
| L₆ | done | ( → ) |
| L₇ | present random (R) | ( ← ) |
| L₈ | done | ( → ) |
| L₉ | calculate response | ( ← ) |
| L₁₀ | response = W | ( → ) |

The arrows indicate the direction of a message: from the device to the card ( <- ) and from the card to the device ( -> ). W is the value of the calculated response. As can be seen, the actual data (2.00 and R) of the high level command H₁ are not altered by the low level commands L₅ and L₇.

After receiving the response W in low level message L₁₀, the device sends a high level message H₂ = RESPON(W) to the server. The actual value of W is not altered by the device.

After receiving the high level response message H₂, the server starts an exchange of low level messages L₁₀ - L₂₀ with the security module:

| | | |
|---|---|---|
| L₁₁ | select SM revalue | ( → ) |
| L₁₂ | OK | ( ← ) |
| L₁₃ | present value (2.00) | ( → ) |
| L₁₄ | OK | ( ← ) |
| L₁₅ | present random (R) | ( → ) |
| L₁₆ | OK | ( ← ) |
| L₁₇ | present response (W) | ( → ) |
| L₁₈ | OK | ( ← ) |
| L₁₉ | calculate X | ( → ) |
| L₂₀ | OK | ( ← ) |

The arrows indicate the direction of a message: from the server to the security module ( → ) and from the security module to the server ( ← ).

As stated above, the actual content of the messages (the value, the random R and the response W) is transparantly transferred, while the length of the messages exchanged between the server and the device is significantly reduced.

The use of mixed low level and high level commands will now be explained, still referring to Fig. 7. For the sake of the example, it will be assumed that the syntax of the instruction "calculate response" is changed in a new release of the smart card. In the example given above, the low level message L₉ will consequently produce an error message L₁₀: "unknown instruction". This message L₁₀ will then be transparantly passed to the server, which may in return produce an appropriate instruction and send this command to the device as high level command H*₃. The device subsequently transfers the command H*₃ as low level command L₂₂ to the card, which then produces the proper response W. The response W is then sent to the security module as commands L₂₃, H*₄ and L₂₄.

In this way, only a single low level command is necessary to remedy the use of an incorrect (e.g. outdated) command. Still, a significant saving in the amount of commands transferred over the network (5 in Figs. 5 and 6) is maintained, and thus a significant saving in transmission time is achieved.

The invention thus provides a pointing device capable of the direct transmission (and reception) of DTMF signals, allowing the device to be used with a telephone line. The preferably built-in smart card reader/writer allows two-way payments to be effected while using the device for games or other purposes. The two-level protocol effectively reduces the transmission time of card data, thus freeing bandwidth of the telephone line for direction data.

## Claims

1. Pointing device (1) for generating signals representing directional information, the device comprising:
- signal generating means (101, 102, 103) for generating pointing signals in response to pointing means (12) being activated by a user,
- an interface (104), electrically connected with the signal generating means (101, 102, 103), for generating signals in response to pointing signals received from the signal generating means (101, 102),
characterised in that
- the pointing mean are constituted by a tiltable stick (12), the signal generating means (101, 102, 103) and the interface (104) being arranged for providing signals corresponding with different tilting directions of the stick (12),
- the device further comprises a card reader/writer (106), electrically connected with the said interface (104), for exchanging data with a smart card (2).

2. Pointing device according to claim 1, wherein the signal generating means comprise:
- first activating means (102) mechanically connected with the pointing means (12) and arranged for causing the interface (104) to produce siqnals corresponding with the keys "1" to "4" inclusive and "6" to "9" inclusive of a telephone set,
- second activating means (103) mechanically connected with one or more keys of the device (1) and arranged for causing the interface (104) to produce signals corresponding with the keys "5", "*", "0" and/or "#" of a telephone set,
- control means (101) for processing pointing signals, the control means being electrically connected with the first and second activating means (102, 103).

3. Pointing device according to claim 2, wherein the control means (101) comprise a microprocessor and a memory (105).

4. Pointing device according to any of the preceding claims, arranged for producing a first code indicating subsequent card data and a second code indicating subsequent directional data.

5. Pointing device according to any of the preceding claims, arranged for communicating with a server (7) using a first type of commands (H) and with a smart card (2) using a second type of commands (L), wherein each of the first and second commands contain corresponding card data and each of the first commands represents at least one of the second commands.

6. Pointing device according to claim 5, in which one of the first commands (H^{*}) comprises a single corresponding one of the second commands (L).

7. Pointing device according to claim 5 or 6, in which another one of the first commands (H) represents a plurality of corresponding ones of the second commands (L).

8. Pointing device according to any one of claims 1-7,
wherein the interface (104) is a DTMF interface for generating DTMF signals in response to pointing signals received from the signal generating means (101, 102).

9. System for remote entertainment, the system comprising:
- a pointing device (1) according to any of the preceding claims,
- a server (7) for providing remote games,
- a telephone set (3) for dialling the server (7),
- a telecommunications network (5), and
- a television set (4) having means (41) for receiving video data, the device (1) and the telephone set (3) being connected with the communications network (5), the server (7) being connected with the communications network (5) via a modem (6), the server comprising means (71) for producing and transmitting video data, and said video data being dependent on direction data produced by the pointing device (1) and transmitted as signals over the network (5).

10. System according to claim 9, wherein the pointing device (1) comprises a card reader/writer (106) for exchanging data with a smart card (2), the system being arranged for transparantly exchanging data between the smart card (2) and a security module (8) of the server (7).

11. System according to claim 9 or 10, wherein the pointing device (1) is arranged for dialling a service provider via the network (5).

## Patentansprüche

1. Zeigeeinrichtung (1) zur Erzeugung von Signalen, die Richtungsinformationen darstellen:
- mit signalerzeugenden Mitteln (101, 102, 103) zur Erzeugung von Zeigesignalen in Antwort auf die Zeigemittel (12), die von einem Benutzer aktiviert werden;
- mit einer Schnittstelle (104), die elektrisch mit den signalerzeugenden Mitteln (101, 102, 103) verbunden ist, um Signale in Antwort auf die Zeigesignale zu erzeugen, die von den signalerzeugenden Mitteln (101, 102) empfangen worden sind;
**dadurch gekennzeichnet,**
- dass die Zeigemittel durch einen neigbaren Stift (12) gebildet werden, wobei die signalerzeugenden Mittel (101, 102, 103) und die Schnittstelle (104) so angeordnet sind, um Signale zu liefern, die verschiedenen Neigungsrichtungen des Stiftes (12) entsprechen und;
- dass die Einrichtung weiterhin einen Kartenleser/Schreiber (106) umfasst, der elektrisch mit der besagten Schnittstelle (104) verbunden ist, um Daten mit einer Smartcard (2) auszutauschen.

2. Zeigeeinrichtung nach Anspruch 1, dadurch gekennzeichnet, dass die signalerzeugenden Mittel umfassen:
- erste Aktivierungsmittel (102), die in mechanischer Weise mit den Zeigemitteln (12) verbunden sind und derart angeordnet sind, damit die Schnittstelle (104) Signale erzeugt, die den Tasten "1" bis "4" inklusive und "6" bis "9" inklusive eines Telefonapparates entsprechen,
- zweite Aktivierungsmittel (103), die in mechanischer Weise mit einer oder mehr Tasten der Einrichtung (1) verbunden sind und derart angeordnet sind, damit die Schnittstelle (104) Signale erzeugt, die den Tasten "5", "*", "0" und/oder "#" eines Telefonapparates entsprechen, und
- Steuermittel (101) zur Verarbeitung von Zeigesignalen. wobei die Steuermittel in elektrischer Weise mit den ersten und mit den zweiten Aktivierungsmitteln (102, 103) verbunden sind.

3. Zeigeeinrichtung nach Anspruch 2, dadurch gekennzeichnet, dass die Steuermittel (101) einen Mikroprozessor und einen Speicher (105) umfassen.

4. Zeigeeinrichtung nach einem der vorstehenden Ansprüche, die so angeordnet ist, um einen ersten Code zu erzeugen, der auf nachfolgende Kartendaten hinweist, und um einen zweiten Code zu erzeugen, der auf nachfolgende Richtungsdaten hinweist.

5. Zeigeeinrichtung nach einem der vorstehenden Ansprüche, die so angeordnet ist, um mit einem Rechner (7) zu kommunizieren, wobei ein erster Typ von Befehlen (H) eingesetzt wird, und um mit einer Smartcard (2) zu kommunizieren, wobei ein zweiter Typ von Befehlen (L) eingesetzt wird, wobei jeder der ersten und der zweiten Befehle entsprechende Kartendaten enthalten und jeder der ersten Befehle zumindest einen der zweiten Befehle darstellt.

6. Zeigeeinrichtung nach Anspruch 5, dadurch gekennzeichnet, dass einer der ersten Befehle (H*) einen einzelnen entsprechenden der zweiten Befehle (L) umfasst.

7. Zeigeeinrichtung nach Anspruch 5 oder nach Anspruch 6, dadurch gekennzeichnet, dass ein anderer der ersten Befehle (H) eine Vielzahl von entsprechenden einzelnen der zweiten Befehle (L) darstellt.

8. Zeigeeinrichtung nach einem der vorstehenden Ansprüche 1 bis 7, dadurch gekennzeichnet, dass die Schnittstelle (104) eine DTMF-Schnittstelle zur Erzeugung von DTMF-Signalen in Antwort auf Zeigesignale ist, die von den signalerzeugenden Mitteln (101, 102) empfangen worden sind.

9. System zur Fernunterhaltung, wobei das System umfasst:
- eine Zeigeeinrichtung (1) gemäss einem der vorstehenden Ansprüche,
- einen Rechner (7) zur Bereitstellung von Fernspielen,
- einen Telefonapparat (3) zum Anwählen des Rechners (7),
- ein Telekommunikationsnetzwerk (5), und
- ein Fernsehgerät (4) mit Mitteln (41) zum Empfang von Videodaten, wobei die Einrichtung (1) und der Telefonapparat (3) mit dem Telekommunikationsnetzwerk (5) verbunden sind, wobei der Rechner (7) über ein Modem (6) mit dem Telekommunikationsnetzwerk (5) verbunden ist, wobei der Rechner Mittel (71) umfasst, um Videodaten zu erzeugen und zu übertragen und wobei besagte Videodaten von den Richtungsdaten abhängig ist, die von der Zeigeeinrichtung (1) erzeugt und als Signale über das Netzwerk (5) übertragen werden.

10. System nach Anspruch 9, dadurch gekennzeichnet, dass die Zeigeeinrichtung (1) einen Kartenleser/-schreiber (106) umfasst, um Daten mit einer Smartcard (2) auszutauschen, wobei das System angeordnet ist, um in transparenter Weise Daten zwischen der Smartcard (2) und einem Sicherheitsmodul (8) des Rechners (7) auszutauschen.

11. System nach einem der Ansprüche 9 oder 10, dadurch gekennzeichnet, dass die Zeigeeinrichtung (1) angeordnet ist, um einen Diensteanbieter über das Netzwerk (5) anzuwählen.

## Revendications

1. Dispositif de pointage (1) servant à produire des signaux qui représentent des informations de direction, le dispositif comprenant :
- un moyen générateur de signaux (101, 102, 103) servant à produire des signaux de pointage en réponse au fait que le moyen de pointage (12) est actionné par un utilisateur,
- une interface (104), électriquement connectée au moyen générateur de signaux (101, 102, 103) et servant à produire des signaux en réponse à des signaux de pointage reçus de la part du moyen générateur de signaux (101, 102), caractérisé en ce que :
- le moyen de pointage est constitué par une manette inclinable (12), le moyen générateur de signaux (101, 102, 103) et l'interface (104) étant conçus pour fournir des signaux correspondant à des directions d'inclinaison différentes de la manette (12),
- le dispositif comprenant en outre un moyen (106) de lecture/écriture sur une carte, lequel est électriquement connecté à ladite interface (104), afin d'échanger des données avec une carte à puce (2).

2. Dispositif de pointage selon la revendication 1, où le moyen générateur de signaux comprend :
- un premier moyen d'activation (102) mécaniquement relié au moyen de pointage (12) et conçu pour amener l'interface (104) à produire des signaux correspondant aux touches "1" à "4", inclusivement, et "6" à "9", inclusivement, d'un clavier téléphonique,
- un deuxième moyen d'activation (103) mécaniquement relié à une ou plusieurs touches du dispositif (1) et conçu pour amener l'interface (104) à produire des signaux correspondant aux touches "5", "*", "0" et, ou bien, "#" d'un poste téléphonique, et
- un moyen de commande (101) servant à traiter des signaux de pointage, le moyen de commande étant électriquement connecté aux premier et deuxième moyens d'activation (102, 103).

3. Dispositif de pointage selon la revendication 2, où le moyen de commande (101) comprend un microprocesseur et une mémoire (105).

4. Dispositif de pointage selon l'une quelconque des revendications précédentes, conçu pour produire un premier code indiquant que des données associées à la carte vont suivre et un deuxième code indiquant que des données de direction vont suivre.

5. Dispositif de pointage selon l'une quelconque des revendications précédentes, conçu pour communiquer avec un serveur (7) au moyen d'un premier type d'instructions (H) et avec une carte à puce (2) au moyen d'un deuxième type d'instructions (L), où chacune des premières et deuxièmes instructions contient des données de carte et chacune des premières instructions représente au moins l'une des deuxièmes instructions.

6. Dispositif de pointage selon la revendication 5, dans lequel l'une des premières instructions (H*) comprend une unique instruction correspondante parmi les deuxièmes instructions (L).

7. Dispositif de pointage selon la revendication 5 ou 6, dans lequel une autre des premières instructions (H) représente une pluralité d'instructions correspondantes parmi les deuxièmes instructions (L).

8. Dispositif de pointage selon l'une quelconque des revendications 1 à 7, où l'interface (104) est une interface DTMF, c'est-à-dire pour multifréquences en code 2, servant à produire de signaux DTMF en réponse à des signaux de pointage reçus de la part du moyen générateur de signaux (101, 102).

9. Système de divertissement à distance, le système comprenant :
- un dispositif de pointage (1) tel que décrit dans l'une quelconque des revendications précédentes,
- un serveur (7) servant à fournir des jeux à distance,
- un poste téléphone (3) servant à composer le numéro de téléphone du serveur (7),
- un réseau de télécommunications (5), et
- un poste de télévision (4) qui possède un moyen (41) servant à recevoir des données vidéos, le dispositif (1) et le poste téléphonique (3) étant connectés au réseau de télécommunications (5), le serveur (7) étant connecté au réseau de télécommunications (5) via un modem (6), le serveur comprenant un moyen (71) destiné à produire des données vidéos et à les émettre, et lesdites données vidéos étant fonction de données de direction produites par le dispositif de pointage (1) et émises sous la forme de signaux sur le réseau (5).

10. Système selon la revendication 9, où le dispositif de pointage (1) comprend un moyen (106) de lecture/écriture sur une carte, qui permet d'échanger des données avec une carte à puce (2), le système étant conçu pour échanger de façon transparente des données entre la carte à puce (2) et un module de sécurité (8) du serveur (7).

11. Système selon la revendication 9 ou 10, où le dispositif de pointage (1) est conçu pour composer le numéro de téléphone d'un prestataire de services via le réseau (5).
